# FASCICULE DE BREVET EUROPEEN

(11) **EP 3 357 263 B1**
(45) Date de publication et mention de la délivrance du brevet: **27.03.2019**
(21) Numéro de dépôt: 16785213.6
(22) Date de dépôt: 23.09.2016
(51) Int. Cl.: H04W 4/90

(54) **PROCÉDÉ DE TRAITEMENT DE REQUÊTES DE TRANSFERT D'APPEL D'URGENCE**
VERFAHREN ZUR VERARBEITUNG VON ANFRAGEN ZUR ÜBERTRAGUNG VON NOTRUFEN
METHOD FOR PROCESSING REQUESTS TO TRANSFER EMERGENCY CALLS

(30) Priorité: 30.09.2015 FR 1559234
(43) Date de publication de la demande: 08.08.2018
(73) Titulaire: Orange, 75015 Paris (FR)
(72) Inventeur: LOAEC, Guy, 29260 Ploudaniel (FR); DOREE, José, 22300 Lannion (FR); LE ROUZIC, Jean-Claude, 22560 Trebeurden (FR)
(74) Mandataire: Cabinet Beau de Loménie
(86) Numéro de dépôt international: PCT/FR2016/052412
(87) Numéro de publication internationale: WO 2017/055714

(56) Documents cités:
- EP-A1- 2 852 119
- US-A1- 2014 376 514
- US-A1- 2015 024 703

## Description

### Arrière-plan de l'invention

L'invention se rapporte au domaine général des télécommunications.

Elle concerne plus particulièrement le traitement d'appels d'urgence dans un coeur de réseau de voix sur IP IMS (IP Multimedia Subsystem) tel que défini par le standard 3GPP (Third Group Partnership Project), et notamment le transfert d'un appel d'urgence initié depuis un premier réseau d'accès vers un second réseau d'accès. Ainsi, l'invention s'applique de façon privilégiée mais non limitative au transfert d'un appel d'urgence initié sur un réseau d'accès mobile à commutation de paquets (ou PS pour Packet Switched) tel un réseau 4G (4^{ème} Génération) ou LTE (Long Term Evolution) qui s'appuie sur une architecture de coeur de réseau IMS, vers un réseau d'accès à commutation de circuits (ou CS pour Circuit Switched) 2G (2^{ème} Génération) ou 3G (3^{ème} Génération) (pour les communications vocales) tel un réseau GSM (Global System for Mobile Communications), UMTS (Universal Mobile Télécommunication System), etc.

Dans les coeurs de réseau de voix sur IP (ou VoIP pour Voice over IP) IMS, il existe une procédure appelée SRVCC (pour Single Radio-Voice Call Continuity) qui permet, en cas de perte de couverture du réseau d'accès 4G, de basculer un appel (et en particulier un appel d'urgence) du coeur de réseau IMS vers le réseau traditionnel CS 2G/3G.

Plus précisément, un appel d'urgence initié par un terminal mobile sur un réseau d'accès 4G (LTE) est traité par un serveur E-CSCF (Emergency-Call Session Control Function). Ce serveur E-CSCF, lors de l'établissement de la session d'appel d'urgence, va sélectionner un noeud ou une instance EATF (Emergency Access Transfer Function) pour ancrer la signalisation, c'est-à-dire forcer le passage de la signalisation relative à l'appel d'urgence par ce noeud EATF. Ce noeud EATF est donc notamment apte à traiter le cas échéant les requêtes de transfert de l'appel d'urgence vers un autre réseau d'accès que le réseau d'accès 4G sur lequel l'appel a été initié, et en particulier vers un réseau d'accès à commutation de circuits 2G/3G, pour assurer la continuité de l'appel d'urgence au cours de son transfert d'un premier réseau d'accès vers un second réseau d'accès. Cette procédure ainsi que les fonctionnalités du noeud EATF sont décrites notamment dans les documents de spécification 3GPP TS 24.229 intitulé « IP multimedia call control protocol based on Session Initiation Protocol (SIP) and Session Description Protocol (SDP); Stage 3 », v13.2.1, juin 2015 et 3GPP TS 24.237 intitulé « IP Multimedia (IM) Core Network (CN) subsystem IP Multimedia Subsystem (IMS) service continuity; Stage 3 », v13.1.0, juin 2015.

Selon l'état actuel du standard 3GPP, en cas de perte de couverture par le terminal mobile sur le réseau d'accès 4G sur lequel l'appel d'urgence a été initié, une requête de transfert de cet appel vers le réseau CS 2G/3G est émise par le réseau d'accès 4G à destination du dispositif MSC (Mobile Switching Center) du réseau 2G/3G qui couvre les cellules 2G et/ou 3G dans lesquelles se trouve le terminal mobile. Ce dispositif MSC est, de façon connue en soi, chargé du traitement des appels émis et reçus sur les réseaux 2G/3G (incluant les appels d'urgence) et de l'interconnexion des réseaux 2G/3G avec les autres réseaux de télécommunications (incluant le réseau 4G sur lequel l'appel d'urgence a été initié). Le dispositif MSC transmet ensuite l'ordre de transfert au coeur de réseau IMS, et plus particulièrement au serveur I-CSCF (Interrogating-CSCF) du coeur de réseau IMS, point d'entrée du coeur de réseau IMS, sous la forme d'une requête SIP (Session Initiation Protocol) INVITE adressée à un identifiant ou numéro de transfert d'appels d'urgence prédéfini aussi désigné par E-STN-SR (pour Emergency Session Transfer Number Single Radio). Le numéro E-STN-SR peut être configuré comme une identité de service publique, ou PSI (Public Service Identity), et être stocké dans le serveur d'abonnés ou HSS (pour Home Subscriber Server). Le serveur I-CSCF peut alors interroger le serveur HSS à l'aide du numéro E-STN-SR pour obtenir une adresse du noeud EATF dans lequel est ancrée la signalisation de l'appel d'urgence à transférer.

La norme prévoit aujourd'hui, pour un coeur de réseau IMS donné, un unique numéro E-STN-SR, configuré sur tous les dispositifs MSC s'interconnectant avec le coeur de réseau IMS, et une seule instance EATF associée à ce numéro E-STN-SR unique à laquelle le serveur I-CSCF transmet la requête SIP INVITE reçue du dispositif MSC. Il en résulte que la perte du site hébergeant cette seule instance EATF (par exemple pour des raisons de congestion ou de charge) entraîne une perte totale de la fonction de transfert d'appels d'urgence dans le coeur de réseau IMS, ce qui s'avère particulièrement préjudiciable.

Pour éviter une telle situation, on peut envisager de déployer plusieurs instances EATF dans un même coeur de réseau IMS. La gestion de plusieurs instances EATF permet par ailleurs d'autoriser plus facilement des configurations dans lesquelles plusieurs régions ou pays sont couverts par un unique coeur de réseau IMS, mais dans lesquelles des instances E-CSCF/EATF dédiées sont attribuées par région ou par pays, la traduction des numéros d'urgence étant toujours spécifique au pays/région de déploiement.

Toutefois, cette situation où plusieurs instances EATF sont déployées dans un même coeur de réseau IMS n'est pas envisagée actuellement dans la norme. Or une telle situation impose, pour mener à bien le transfert de l'appel d'urgence, de s'assurer que l'instance EATF sélectionnée par le serveur I-CSCF coïncide avec l'instance EATF sélectionnée par le serveur E-CSCF pour ancrer la session de l'appel d'urgence qui doit être transférée.

Le document WO 2013/075746 propose une solution de redirection de proche en proche d'une requête de transfert d'un appel d'urgence entre plusieurs instances EATF du coeur de réseau IMS permettant de gérer les situations dans lesquelles l'instance EATF recevant la requête de transfert n'est pas l'instance dans laquelle est ancrée la session d'appel à transférer. Il convient toutefois de noter que cette solution ne fonctionne pas lorsque la première instance EATF à laquelle est transférée la requête de transfert et qui est sélectionnée par le serveur I-CSCF n'est pas accessible, par exemple en cas de défaillance ou de congestion du site hébergeant cette instance. Par ailleurs, le parcours de la requête de transfert entre les différentes instances EATF ou la redirection vers une autre instance EATF engendre un délai de transfert qui peut se traduire, dans certains cas, par une coupure de l'appel d'urgence si le transfert n'est pas mené à terme rapidement.

### Objet et résumé de l'invention

L'invention permet notamment de remédier aux inconvénients cités de l'état de la technique en proposant un procédé de traitement, par un serveur d'entrée d'un coeur de réseau IMS, de requêtes de transfert de sessions d'appel d'urgence, ledit procédé étant caractérisé en ce qu'il comprend :
- une étape préalable de configuration au niveau du serveur d'entrée, d'une table associant à au moins un numéro de transfert de session d'appel d'urgence, une pluralité de noeuds de transfert de session d'appel d'urgence, chaque noeud étant identifié dans ladite table par une adresse ;
- une étape de détermination, déclenchée sur réception d'une requête de transfert d'une session d'appel d'urgence d'un premier réseau d'accès vers un second réseau d'accès, cette requête de transfert comprenant un numéro de transfert de session d'appel d'urgence, ladite étape comprenant la détermination à partir de la table configurée préalablement au niveau du serveur d'entrée, d'au moins une adresse d'un noeud de transfert associé au numéro de transfert compris dans la requête pour transférer cette requête ; et
- une étape d'envoi de la requête de transfert à destination de ladite au moins une adresse ainsi déterminée.

Corrélativement, l'invention vise aussi un serveur d'entrée d'un coeur de réseau IMS comprenant :
- une table configurée préalablement et localement au niveau du serveur d'entrée, cette table associant à au moins un numéro de transfert de session d'appel d'urgence une pluralité de noeuds de transfert de session d'appel d'urgence, chaque noeud étant identifié dans cette table par une adresse ;
- un module de réception, apte à recevoir une requête de transfert d'une session d'appel d'urgence d'un premier réseau d'accès vers un second réseau d'accès, cette requête de transfert comprenant un numéro de transfert de session d'appel d'urgence ;
- un module de détermination, activé par le module de réception sur réception de la requête de transfert, ce module de détermination étant configuré pour déterminer à partir de la table configurée préalablement au niveau du serveur d'entrée, au moins une adresse d'un noeud de transfert associé au numéro de transfert compris dans la requête pour transférer cette requête ; et
- un module d'envoi de la requête de transfert à destination de ladite au moins une adresse déterminée par le module de détermination.

Le serveur d'entrée selon l'invention est typiquement un serveur I-CSCF du coeur de réseau IMS, et les noeuds de transfert de sessions d'appel d'urgence sont des instances EATF telles que précédemment décrites. Par instance, on entend au sens classique du terme la réplique d'une fonction (en l'occurrence ici de la fonction EATF), différentes instances pouvant être déployées sur des dispositifs physiques distincts (par exemple pour bénéficier d'une redondance géographique de la fonction) ou sur un même dispositif physique.

L'invention propose ainsi de définir une nouvelle procédure d'adressage par un serveur I-CSCF d'une pluralité d'instances (i.e. de noeuds) EATF déployées dans un coeur de réseau IMS pour le traitement des requêtes de transfert des appels d'urgence. Cette procédure s'appuie sur le stockage préalable en local, au niveau du serveur I-CSCF du coeur de réseau IMS, d'une nouvelle table prédéfinie qui identifie pour au moins un numéro de transfert de session d'appel d'urgence une pluralité d'EATF via leurs adresses respectives (ex. adresses IP (Internet Protocol)). Par table, on entend ici tout type de structure multidimensionnelle permettant de stocker des données.

Lorsque le coeur de réseau IMS comprend plusieurs serveurs I-CSCF distincts, la table proposée par l'invention est stockée localement au niveau de chacun de ces serveurs.

Cette table configurée localement au niveau de chaque serveur I-CSCF contient avantageusement l'ensemble des adresses des instances EATF déployées dans le coeur de réseau IMS en association avec le ou les numéros E-STN-SR supportés par le coeur de réseau IMS en cas de mutualisation du coeur de réseau IMS entre plusieurs pays ou région (par exemple un numéro E-STN-SR distinct par réseau public terrestre ou PLMN (pour Public Land Mobile Network)). Ainsi, conformément à l'invention, et grâce à cette table, lorsqu'une requête de transfert d'un appel d'urgence parvient au serveur I-CSCF, celui-ci peut identifier directement la ou les instances EATF susceptibles d'être concernées par cette requête de transfert vers lesquelles transférer la requête.

En effet, contrairement à l'état de la technique (document WO2013/075746 et standard 3GPP), la table étant préétablie et configurée localement au niveau de chaque serveur I-CSCF, il n'est pas nécessaire au serveur I-CSCF recevant la requête de transfert du dispositif MSC du second réseau d'accès de consulter le serveur d'abonnés HSS pour obtenir l'adresse d'une instance EATF correspondant au numéro E-STN-SR vers laquelle transférer la requête de transfert. Il s'en suit un gain en termes de charge et de trafic sur l'interface Diameter Cx avec le serveur HSS, un délai de traitement de la requête de transfert par le serveur I-CSCF diminué, mais aussi la continuité du traitement des appels d'urgence même en cas d'indisponibilité du serveur HSS.

L'invention est en outre mise en oeuvre avantageusement au niveau du serveur I-CSCF, c'est-à-dire au niveau du serveur d'entrée du coeur de réseau IMS pour le monde extérieur au coeur de réseau IMS (typiquement pour les dispositifs MSC ou pour les autres opérateurs). L'invention ne requiert par conséquent qu'une modification mineure du serveur I-CSCF tel qu'il est prévu actuellement dans le standard 3GPP. Elle permet donc de déployer aisément des instances EATF multiples dans le coeur de réseau IMS, par exemple sur plusieurs sites géographiques, et de s'assurer que la fonction EATF à proprement parler reste disponible et ce, même en cas de perte ou d'inaccessibilité d'une des instances EATF déployées.

Dans un mode particulier de réalisation, la table configurée au niveau du serveur d'entrée comprend, pour le numéro de transfert compris dans la requête reçue, une pluralité d'adresses de noeuds de transfert, et au cours de l'étape d'envoi, la requête de transfert est envoyée simultanément à destination de cette pluralité d'adresses.

Corrélativement, dans ce mode de réalisation, la table configurée au niveau du serveur d'entrée comprend, pour le numéro de transfert compris dans la requête reçue, une pluralité d'adresses de noeuds de transfert, et le module d'envoi est configuré pour envoyer la requête de transfert simultanément à destination de ladite pluralité d'adresses.

Autrement dit, dans ce mode de réalisation, le serveur I-CSCF transmet la requête de transfert de la session d'appel d'urgence en parallèle à tous les noeuds de traitement associés dans la table au numéro de transfert compris dans la requête. Seul le noeud de traitement ayant ancré la signalisation de l'appel d'urgence est en revanche en mesure de répondre positivement à (i.e. de traiter) cette requête de transfert d'appel. On s'assure toutefois via cette émission en parallèle vers tous les noeuds de traitement identifiés dans la table en association avec le numéro de transfert compris dans la requête que la requête de transfert est transmise sans délai au noeud ayant ancré la signalisation de l'appel d'urgence.

En outre, ce mode de réalisation permet de gérer facilement un déploiement de la fonction EATF sur des sites géographiques redondants pour assurer que le transfert des appels d'urgence reste toujours possible.

Dans un autre mode de réalisation, chaque noeud de transfert est associé à une priorité dans la table configurée au niveau du serveur d'entrée, et au cours de l'étape d'envoi, la requête de transfert est envoyée simultanément à destination de la ou des adresses des noeuds associés à la priorité la plus forte dans la table.

Ce mode de réalisation permet d'attribuer des priorités aux différents noeuds de traitement, lesdites priorités étant représentatives de leur capacité à traiter la requête de transfert à un instant donné. Ce mode de réalisation a une application privilégiée dans un contexte de réaménagement réseau (par exemple en vue d'une augmentation capacitaire, d'une mise en maintenance d'une ou plusieurs instances EATF et de la définition à un instant donné d'instances de secours, etc.).

Dans un mode particulier de réalisation, le procédé de traitement comprend une étape de mise à jour de la table configurée préalablement au niveau du serveur d'entrée pour au moins un numéro de session de transfert d'urgence.

Cette mise à jour peut comprendre notamment une mise à jour des priorités associées à chacun des noeuds de traitement en fonction de l'évolution de la configuration du coeur de réseau (noeud de traitement nominal et noeuds de secours redondants) ou de l'état des noeuds de traitement, etc.

Ainsi par exemple, suite à la détection d'un état non opérationnel d'un noeud de transfert associé à la priorité la plus forte auquel le serveur d'entrée a envoyé la requête de transfert, le procédé de traitement peut comprendre une étape de mise à jour de la table au cours de laquelle ce noeud de transfert est associé à une priorité inférieure à la priorité la plus forte dans la table.

La détection d'un état non opérationnel du noeud de transfert peut être réalisée de différentes façons.

Ainsi, par exemple, un tel état peut être détecté si, à l'expiration d'un temporisateur déclenché pour une période de temps prédéterminée à compter de l'envoi de la requête de transfert par le serveur d'entrée à un noeud de transfert déterminé, le serveur d'entrée n'a reçu aucune réponse (positive ou négative) de ce noeud de transfert.

En variante, une condition d'erreur de niveau réseau ou transport peut être détectée par le serveur d'entrée, par exemple le serveur d'entrée a reçu un message TCP (Transmission Control Protocol) RST (Reset), ou un message ICMP (Internet Control Message Protocol) « Destination Unreachable ».

Selon une autre variante encore, le serveur d'entrée peut avoir reçu une réponse négative prédéterminée du noeud de transfert (spécifique à l'invention) signalant un état du noeud de transfert telle que par exemple une réponse indiquant « noeud de transfert en surcharge » ou « noeud de transfert en maintenance », et que le serveur d'entrée associe à un état non opérationnel du noeud de transfert en question.

L'étape de mise à jour peut également comprend le changement de la priorité d'un noeud de transfert associé dans la table à une priorité inférieure à la priorité la plus forte, de sorte à lui associer ladite priorité la plus forte.

Une telle mise à jour permet d'optimiser le temps de transfert d'une session d'appel d'urgence. En effet, quand bien même cette mise à jour n'empêche pas la perte de l'appel d'urgence en cours de traitement, elle permet avantageusement de traiter efficacement et correctement les requêtes de transfert subséquentes.

Dans un mode particulier de réalisation, les différentes étapes du procédé de traitement sont déterminées par des instructions de programmes d'ordinateurs.

En conséquence, l'invention vise aussi un programme d'ordinateur sur un support d'informations, ce programme étant susceptible d'être mis en oeuvre dans un serveur d'entrée d'un coeur de réseau IMS ou plus généralement dans un ordinateur, ce programme comportant des instructions adaptées à la mise en oeuvre des étapes d'un procédé de traitement tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

L'invention vise également un coeur de réseau IMS comprenant une pluralité de noeuds de traitement de session d'appel d'urgence associé à au moins un numéro de transfert d'appel d'urgence et un serveur d'entrée dans le coeur de réseau IMS selon l'invention.

On peut également envisager, dans d'autres modes de réalisation, que le procédé de traitement, le serveur d'entrée du coeur de réseau IMS et le coeur de réseau IMS selon l'invention présentent en combinaison tout ou partie des caractéristiques précitées.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente, de façon schématique, un coeur de réseau IMS conforme à l'invention dans un mode particulier de réalisation ;
- la figure 2 illustre l'architecture matérielle d'un serveur d'entrée du coeur de réseau IMS conforme à l'invention, dans un mode particulier de réalisation ;
- la figure 3 représente un exemple de table configurée en local au niveau du serveur d'entrée du coeur de réseau IMS de la figure 1 ; et
- la figure 4 représente, sous forme d'ordinogramme, les principales étapes d'un procédé de traitement selon l'invention telles qu'elles sont mises en oeuvre par le serveur d'entrée du coeur de réseau IMS de la figure 1.

### Description détaillée de l'invention

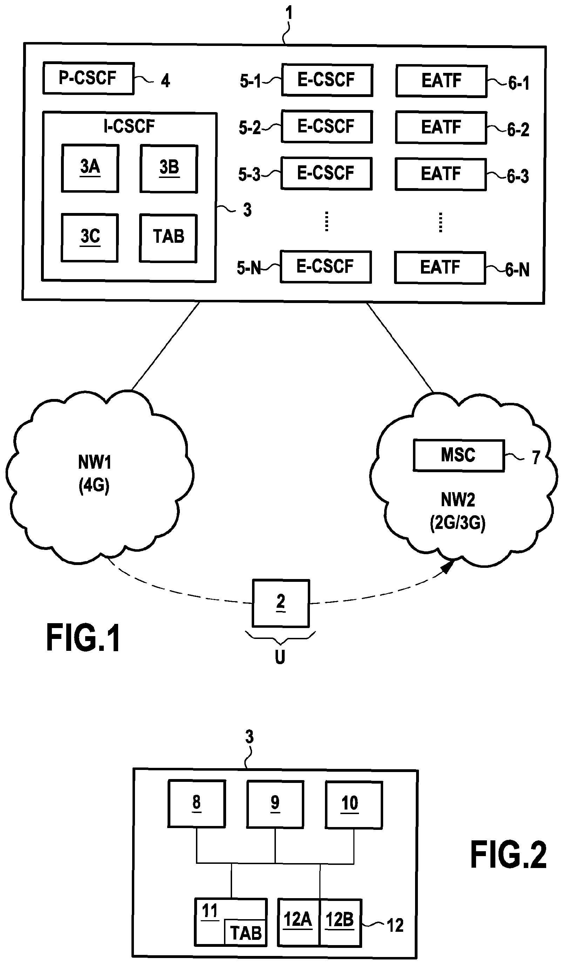

La **figure 1** représente, dans son environnement, un coeur de réseau 1 de voix sur IP, s'appuyant sur une architecture IMS et conforme à l'invention, dans un mode particulier de réalisation.

De façon connue, l'architecture IMS est une architecture standardisée, définie par le standard 3GPP, et permettant de fournir à des utilisateurs munis de terminaux appropriés des services multimédias fixes et mobiles. Elle permet entre autres, d'utiliser la technologie de voix sur IP et s'appuie à cet effet, sur le protocole d'initiation de session SIP.

Dans l'exemple illustré à la figure 1, on considère un terminal 2 d'un utilisateur U, apte à accéder aux services offerts par le coeur de réseau 1. Aucune limitation n'est attachée à la nature du terminal 2. Il peut s'agir par exemple d'un téléphone intelligent ou « smartphone » en anglais, d'une tablette numérique ou encore d'un ordinateur portable, etc.

Le terminal 2 est un terminal multimode en ce sens qu'il peut accéder aux services offerts par le coeur de réseau IMS 1 via différents réseaux d'accès, et en particulier via un premier réseau d'accès NW1 et via un second réseau d'accès NW2. Dans l'exemple envisagé ici, le réseau d'accès NW1 est un réseau d'accès 4G (LTE) et le réseau d'accès NW2 est un réseau d'accès 2G/3G. Toutefois d'autres réseaux d'accès peuvent être envisagés en variante.

Comme mentionné précédemment, l'invention s'intéresse au traitement des appels d'urgence initiés dans un coeur de réseau IMS et plus particulièrement au transfert de ces appels d'un réseau d'accès à l'autre. Dans l'exemple envisagé à la figure 1, on considère ainsi un appel d'urgence initié par le terminal 2 dans le coeur de réseau IMS (i.e. dans le domaine PS) via le réseau d'accès NW1, puis transféré vers le domaine CS, le terminal 2 étant amené à basculer sur le réseau d'accès NW2 suite par exemple, à une perte de couverture du réseau NW1 par le terminal 2.

Sur la figure 1, seules les entités du coeur de réseau IMS 1 intervenant dans le traitement des appels d'urgence sont représentées par souci de simplification. Ces entités comprennent en particulier ici un serveur I-CSCF 3 conforme à l'invention, un serveur P-CSCF 4 (pour Proxy-CSCF), une pluralité de serveurs de traitement d'appel d'urgence E-CSCF 5-1,...,5-N, auxquels sont associés une pluralité de noeuds de transfert d'appels d'urgence EATF 6-1,..., 6-N, N désignant un entier supérieur à 1. Ces différentes entités, sauf lorsque cela est indiqué explicitement dans la description, implémentent les fonctionnalités des entités correspondantes telles que définies dans le standard 3GPP. En particulier, le serveur I-CSCF 3 constitue le point (serveur) d'entrée sur le coeur de réseau IMS pour les entités externes au coeur de réseau IMS et en particulier pour le dispositif MSC 7 gérant les appels dans le réseau d'accès NW2. Un tel dispositif est connu en soi et n'est pas décrit plus en détail ici.

En variante, le coeur de réseau IMS 1 peut comprendre plusieurs serveurs I-CSCF et/ou plusieurs serveurs P-CSCF, afin notamment de redonder la ou les fonctions assurées par ces serveurs.

Il convient par ailleurs de noter que les différentes entités mentionnées ci-dessus (P-CSCF, I-CSCF, E-CSCF, E-ATCF, etc.) peuvent être hébergées sur un même dispositif physique ou sur des dispositifs physiques distincts.

Dans le mode de réalisation décrit ici, le serveur I-CSCF 3 a l'architecture matérielle d'un ordinateur. Comme illustré à la **figure 2****,** il comprend ainsi notamment un processeur 8, une mémoire morte 9, une mémoire vive 10, une mémoire non volatile 11 et un module de communication 12 comprenant notamment un premier module de communication 12A sur le réseau d'accès NW1 et un deuxième module de communication 12B sur le réseau d'accès NW2, connus en soi. La mémoire morte 9 du serveur I-CSCF 3 constitue un support d'enregistrement conforme à l'invention, lisible par le processeur 8 et sur lequel est enregistré un programme d'ordinateur conforme à l'invention comportant des instructions pour l'exécution des étapes du procédé de traitement selon l'invention.

Autrement dit, le serveur I-CSCF 3 diffère d'un serveur I-CSCF tel que défini par le standard 3GPP en ce qu'il est configuré pour mettre en oeuvre un procédé de traitement selon l'invention. A cet effet, comme mentionné précédemment, le serveur I-CSCF 3 est configuré par l'opérateur du coeur de réseau IMS 1 avec une table TAB préétablie, stockée ici dans sa mémoire non volatile 11. Par table, on entend ici une structure de données multidimensionnelle permettant de stocker des données.

La table TAB configurée localement au niveau du serveur I-CSCF 3 associe à au moins un numéro de transfert de session d'appel d'urgence de type E-STN-SR, une pluralité de noeuds EATF parmi les noeuds 6-1,...,6-N précités, chaque noeud étant identifié dans la table TAB par son adresse de joignabilité ou de contact. Cette adresse est par exemple ici une adresse IP. Il peut s'agir en variante d'un nom de domaine, pouvant être résolu par des procédures DNS classiques et connues en soi.

Dans le mode de réalisation décrit ici, chaque noeud de transfert identifié dans la table TAB est en outre associé à une priorité, représentative ici de sa probabilité de traiter les requêtes de transfert. Ces priorités sont établies par l'opérateur en fonction de divers critères. Par exemple, un noeud EATF destiné à être choisi nominalement pour ancrer la signalisation des appels d'urgence (désigné par la suite par « noeud nominal ») peut être associé à une priorité P1 supérieure à une priorité P2 associée à un noeud EATF de secours prévu pour être sollicité en cas de défaillance de ce noeud nominal. L'opérateur peut également choisir d'associer la même priorité P1 à tous les noeuds EATF dont il dispose pour une zone géographique donnée.

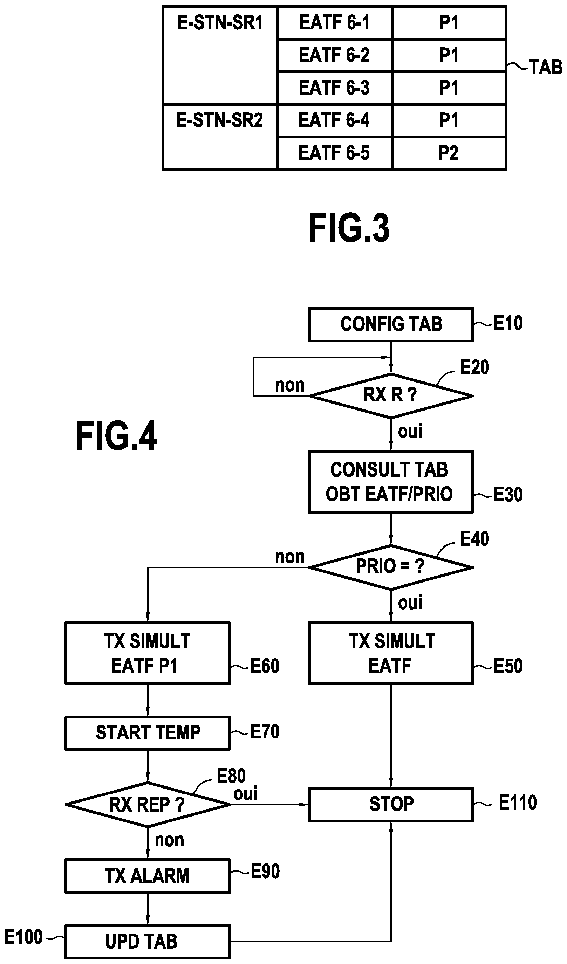

La **figure 3** illustre un exemple de table TAB avec laquelle est configurée le serveur I-CSCF 3. Selon cet exemple, deux numéros de transfert E-STN-SR1 et E-STN-SR2 sont considérés pour le coeur de réseau IMS 1. Ces numéros sont par exemple associés à des zones géographiques différentes (ex. à des pays différents).

Le numéro de transfert E-STN-SR1 est associé à trois noeuds EATF 6-1, 6-2 et 6-3. Chaque noeud EATF est associé à la même priorité P1.

Le numéro de transfert E-STN-SR2 est associé quant à lui à deux noeuds EATF 6-4 et 6-5 eux-mêmes associés à des priorités différentes : le noeud EATF 6-4 est notamment associé à une priorité P1 et le noeud EATF 6-5 à une priorité P2, avec P1 supérieure à P2. Un tel cas de figure peut se présenter par exemple lorsque le noeud EATF 6-5 est un noeud EATF de secours, prévu pour être sollicité en cas de défaillance du noeud nominal EATF 6-4. Les priorités P1 et P2 sont ici représentatives d'un mode de fonctionnement dit nominal ou d'un mode de fonctionnement dit de secours des noeuds de transfert EATF.

Bien entendu cet exemple n'est donné qu'à titre illustratif, et un nombre différent de numéros E-STN-SR peut être envisagé (par exemple un unique numéro), de même qu'un nombre différent de noeuds EATF associés à chaque numéro E-STN-SR et une configuration différente des priorités associées à ces noeuds EATF par l'opérateur du coeur de réseau IMS.

Le programme d'ordinateur mentionné précédemment, stocké dans la mémoire morte 9 du serveur I-CSCF 3, définit ici des modules fonctionnels et logiciels du serveur I-CSCF 3, aptes à mettre en oeuvre les étapes du procédé de traitement selon l'invention. Ces modules fonctionnels comprennent notamment un module de réception 3A de requêtes de transfert de sessions d'appel d'urgence, un module 3B de détermination de noeuds EATF pour le traitement de ces requêtes, ce module 3B étant apte à interroger la table TAB, et un module 3C d'envoi des requêtes de transfert reçues aux noeuds EATF identifiés par le module de détermination. Ces modules s'appuient notamment et/ou commandent les éléments physiques et matériels 8-12 du serveur I-CSCF 3 décrits précédemment en référence à la figure 2. En particulier, le module de réception 3A et le module d'envoi 3C s'appuient ou commandent le module matériel de communication 12 du serveur I-CSCF 3 et plus particulièrement les modules matériels de communications 12A et 12B. Les fonctions des modules 3A, 3B et 3C sont détaillées ultérieurement en référence aux étapes correspondantes du procédé de traitement selon l'invention.

Nous allons maintenant décrire, en référence à la **figure 4****,** les principales étapes du procédé de traitement selon l'invention, dans un mode particulier de réalisation, et tel qu'il est mis en oeuvre par le serveur I-CSCF 3 en utilisant la table TAB illustrée à la figure 3.

Conformément à l'invention, on suppose que le serveur I-CSCF 3 a été préalablement configuré avec la table TAB (étape E10). Il convient de noter que lorsque le coeur de réseau IMS implémente plusieurs serveurs I-CSCF 3, par exemple dans un souci de redondance des fonctions assurées par le I-CSCF, chacun des serveurs implémentés est configurés préalablement avec la table TAB, c'est-à-dire dispose, en préalable de tout traitement de requêtes de transfert de sessions d'appel, de la table TAB stockée dans sa mémoire non volatile par exemple.

On suppose maintenant que l'utilisateur U par le biais de son terminal 2, et conformément à l'état actuel de la technique, établit un appel d'urgence via le réseau d'accès NW1. Cet appel d'urgence transite via le serveur P-CSCF 4, point d'entrée des requêtes des utilisateurs dans le coeur de réseau IMS 1, et est traité de façon conforme au standard 3GPP par le noeud E-CSCF 5-2 par exemple. En particulier, on suppose ici que le noeud E-CSCF 5-2 ancre la signalisation de l'appel d'urgence émis par le terminal 2 dans le noeud EATF 6-2. On note que le serveur P-CSCF 4 choisit un unique noeud E-CSCF, à savoir le noeud 5-2, parmi les différents noeuds E-CSCF déployés dans le coeur de réseau IMS 1 pour traiter l'appel d'urgence entrant.

Le traitement des appels d'urgence tel que défini dans le standard 3GPP est décrit notamment dans les documents précités 3GPP TS 24.229 et TS 24.237 et n'est pas repris en détail ici.

On suppose maintenant que le terminal 2 perd sa couverture LTE sur le réseau NW1. L'entité MME (Mobility Management Entity) du coeur de réseau IMS 1 (non représentée sur la figure 1) initie alors les procédures de transfert d'accès entre le réseau d'accès LTE NW1 et le réseau d'accès 2G/3G NW2 vers lequel bascule le terminal 2 de l'utilisateur U. Conformément aux procédures définies dans le standard 3GPP TS 24.237 dans une telle situation, le dispositif MSC 7 en charge du traitement des appels dans le réseau d'accès NW2 émet alors une requête de transfert R vers le serveur I-CSCF 3 du coeur de réseau IMS 1.

On suppose que le dispositif MSC 7 est ici configuré pour traiter le transfert des appels d'urgence initiés dans le coeur de réseau 1 avec le numéro de transfert E-STN-SR1. La requête de transfert R a donc la forme d'une requête SIP INVITE adressée au numéro de transfert E-STN-SR1. Autrement dit, conformément au protocole SIP, le numéro de transfert E-STN-SR1 est compris dans le champ « Request-URI » de la requête.

Sur réception de la requête R (réponse oui à l'étape test E20 consistant à détecter la réception d'une requête de transfert d'appel d'urgence) via le réseau NW2 et par l'intermédiaire de son module de réception 3A, le serveur I-CSCF 3 détermine que cette requête est adressée au numéro de transfert E-STN-SR1, et consulte, par l'intermédiaire de son module de détermination 3B, la table TAB à l'aide de ce numéro pour déterminer les noeuds de transfert EATF associés au numéro E-STN-SR1 (étape E30).

Dans l'exemple illustré à la figure 3, le module 3B du serveur I-CSCF 3 détermine que trois noeuds EATF, à savoir les noeuds 6-1, 6-2 et 6-3, sont associés au numéro de transfert de session d'appel d'urgence E-STN-SR1. Ces noeuds sont associés dans la table TAB à la même priorité relative P1.

Dans le mode de réalisation décrit ici, lorsque tous les noeuds EATF associés au numéro de transfert compris dans la requête de transfert reçue par le serveur I-CSCF 3 ont la même priorité (réponse oui à l'étape test E40 consistant à déterminer si les noeuds identifiés dans la table à l'étape E30 sont associés à des priorités identiques ou pas), le serveur I-CSCF 3 envoie simultanément vers tous ces noeuds (i.e. vers les noeuds EATF 6-1, 6-2 et 6-3 ici) la requête de transfert R, aux adresses indiquées pour ces noeuds dans la table TAB et par l'intermédiaire de son module d'envoi 3C (étape E50).

Les noeuds EATF 6-1 et EATF 6-3 n'ayant pas été impliqués initialement dans le traitement de l'appel d'urgence émis par le terminal 2 (la signalisation de cet appel étant ancrée dans le noeud EATF 6-2), ces noeuds répondent à la requête de transfert reçue du serveur I-CSCF 3 par un message SIP 404, de façon classique en soi.

Le noeud EATF 6-2 quant à lui, a ancré la signalisation de l'appel d'urgence lors de son établissement par le terminal 2. Il est donc bien en mesure de répondre positivement et de traiter la requête de transfert reçue du serveur I-CSCF 3, et notamment de faire suivre cette requête R vers le serveur E-CSCF 5-2, qui à son tour relaie cette requête vers un centre d'appel d'urgence de type PSAP (pour Public Safety Answering Point), connu en soi, conformément aux procédures actuellement définies dans le standard 3GPP et décrites dans le document 3GPP TS 24.237 cité précédemment. Le procédé de traitement selon l'invention est alors achevé (étape E110).

On peut envisager en variante une autre utilisation de l'invention dans laquelle les paires de serveur/noeud 5-1/6-1, 5-2/6-2 et 5-3/6-3 sont des paires redondantes les unes par rapport aux autres, qui peuvent être utilisées en cas de défaillance ou d'inaccessibilité de l'une ou l'autre de ces paires, par exemple parce que le site sur lequel elle est hébergée est défaillant ou inaccessible. Ainsi par exemple, on suppose que le site hébergeant le serveur E-CSCF 5-1 (et le noeud EATF 6-1 associé) est défaillant de sorte que sur réception de l'appel d'urgence émis par le terminal 2, le serveur P-CSCF 4 transmet cet appel au serveur E-CSCF 5-2 qui ancre la signalisation associée dans le noeud EATF 6-2.

Dans ce cas, suite à l'envoi de la requête de transfert R aux trois noeuds EATF 6-1, 6-2 et 6-3, le site hébergeant le noeud EATF 6-1 étant inaccessible, aucune réponse n'est reçue par le serveur I-CSCF 3 du noeud EATF 6-1, tandis qu'il reçoit une réponse positive du noeud EATF 6-2 ancrant la signalisation de l'appel à transférer.

L'invention permet ainsi de déployer la fonction EATF sur des sites géographiques redondants pour assurer que le transfert des appels d'urgence reste toujours possible.

Nous allons maintenant illustrer par un autre exemple le comportement du serveur I-CSCF 3 lorsque les noeuds de transfert EATF associés au numéro E-STN-SR contenu dans la requête de transfert n'ont pas tous la même priorité dans la table TAB. Le recours à des priorités différentes dans la table TAB permet de faciliter le déploiement de noeuds EATF de secours pour pallier à une inaccessibilité d'un noeud EATF nominal, par exemple pour cause de dysfonctionnement ou d'une défaillance du noeud nominal. En effet, grâce à l'attribution de priorités différentes au noeud nominal et aux noeuds de secours dans la table, il est possible en cas de non-disponibilité du noeud nominal pour traiter la requête de transfert en cours, d'identifier rapidement un noeud de secours pour prendre le relais au niveau du réseau pour la gestion des requêtes de transfert subséquentes, comme illustré maintenant.

Selon cet autre exemple, on suppose maintenant que l'appel d'urgence émis par le terminal 2 via le réseau d'accès NW1 est acheminé par le serveur P-CSCF 4 vers le serveur E-CSCF 5-4. La signalisation de l'appel est ancrée par le serveur E-CSCF 5-4 dans le noeud EATF 6-4.

Lorsque le terminal 2 perd sa couverture LTE sur le réseau NW1, comme mentionné précédemment, l'entité MME du coeur de réseau IMS 1 initie les procédures de transfert d'accès entre le réseau d'accès LTE NW1 et le réseau d'accès 2G/3G NW2 et le dispositif MSC 7 émet alors une requête de transfert R vers le serveur I-CSCF 3 du coeur de réseau IMS 1. On suppose maintenant dans cet exemple que le dispositif MSC 7 est configuré avec le numéro de transfert E-STN-SR2. La requête de transfert R a donc la forme d'une requête SIP INVITE contenant dans son champ « Request-URI » le numéro de transfert E-STN-SR2.

Sur réception de la requête R par son module de réception 3A, le serveur I-CSCF 3 détermine que cette requête est adressée au numéro de transfert E-STN-SR2, et consulte sa table TAB à l'aide de ce numéro pour déterminer les noeuds de transfert EATF associés au numéro E-STN-SR2 (étape E30).

Dans l'exemple illustré à la figure 3, le module 3B du serveur I-CSCF 3 détermine que deux noeuds EATF, à savoir les noeuds 6-4 et 6-5, sont associés au numéro de transfert de session d'appel d'urgence E-STN-SR2 avec des priorités différentes. Le noeud EATF 6-4 est associé dans la table TAB à la priorité P1 tandis que le noeud EATF 6-5 est associé à la priorité P2 inférieure à P1. Dans cet exemple cela signifie que le noeud EATF nominal est le noeud EATF 6-4 et que le noeud de secours est le noeud EATF 6-5.

Dans le mode de réalisation décrit ici, lorsque des noeuds EATF associés au numéro de transfert compris dans la requête de transfert reçue par le serveur I-CSCF 3 ont des priorités distinctes (réponse non à l'étape test E40), le serveur I-CSCF 3, par l'intermédiaire de son module d'envoi 3C, envoie la requête vers le ou les noeuds EATF ayant la priorité la plus haute (P1 ici), autrement dit correspondant au mode de fonctionnement nominal du coeur de réseau IMS (étape E60). Dans l'exemple de la figure 3, la requête de transfert est ainsi envoyée au noeud EATF 6-4. Si plusieurs noeuds partagent cette même priorité, la requête de transfert est envoyée vers tous ces noeuds simultanément.

L'envoi de la requête de transfert au noeud EATF 6-4 déclenche, dans le mode de réalisation décrit ici, l'armement d'un temporisateur pour une période de temps T prédéterminée (étape E70).

Si à l'expiration de la période de temps T, aucune réponse positive ou plus généralement aucune réponse n'est reçue du noeud EATF 6-4 (dans lequel, dans l'exemple envisagé ici, la signalisation de l'appel d'urgence émis par le terminal 2 est ancrée) (réponse non à l'étape test E80), le mode de fonctionnement de secours est déclenché. En effet, le noeud EATF 6-4 ayant ancré la signalisation de l'appel d'urgence émis par le terminal 2 ne répondant pas, cela signifie que ce noeud n'est pas accessible par exemple parce qu'il est défaillant ou en maintenance, etc., et n'est donc pas en mesure de traiter le transfert de cet appel. L'appel d'urgence en cours de traitement est alors perdu.

Dans le mode de réalisation décrit ici, l'absence de réponse de la part du noeud EATF 6-4 déclenche l'envoi par le module d'envoi 3C du serveur I-CSCF 3 d'une alarme à l'opérateur du coeur de réseau IMS 1 pour lui signaler l'indisponibilité du noeud EATF nominal 6-4 (étape E90).

Les étapes E70 et E80 décrites précédemment constituent une étape test, visant à détecter le cas échéant un état non opérationnel (ex. un état d'inaccessibilité) du noeud de transfert EATF 6-4 auquel la requête de transfert a été envoyée par le serveur I-CSCF 3 (ou des noeuds de transfert auxquels a été envoyée la requête de transfert).

D'autres façons de détecter un état non opérationnel d'un noeud de transfert auquel le serveur I-CSCF 3 a envoyé la requête de transfert peuvent toutefois être envisagées en variante ou en complément de l'alternative proposée aux étapes E70 et E80 de la figure 4.

Ainsi, par exemple une condition d'erreur de niveau réseau ou transport peut être détectée par le serveur I-CSCF 3, par exemple le serveur I-CSCF 3 peut détecter s'il a reçu un message TCP (Transmission Control Protocol) RST (Reset), ou un message ICMP (Internet Control Message Protocol) « Destination Unreachable ».

Selon une autre variante encore, le serveur I-CSCF 3 peut détecter s'il a reçu une réponse négative prédéterminée du noeud de transfert (spécifique à l'invention) signalant un état du noeud de transfert telle que par exemple une réponse indiquant « noeud de transfert en surcharge » ou « noeud de transfert en maintenance », et que le serveur d'entrée associe à un état non opérationnel du noeud de transfert en question.

Suite à l'envoi de cette alarme, pour pallier au dysfonctionnement du noeud nominal EATF 6-4, la table TAB est mise à jour (étape E100). Cette mise à jour peut être réalisée par l'opérateur du coeur de réseau IMS 1 informé de l'indisponibilité du noeud EATF 6-4 ou par le serveur I-CSCF 3 directement. Plus précisément, dans l'exemple envisagé ici, elle consiste à changer la priorité associée au noeud EATF nominal 6-4 de P1 (priorité forte) vers P2 (priorité basse), et à changer la priorité associée au noeud EATF de secours 6-5 de P2 (priorité basse) à P1 (priorité forte). Autrement dit, on inverse les priorités des noeuds EATF 6-4 et 6-5 pour le traitement des requêtes de transfert à venir.

Par ailleurs, le noeud EATF 6-4 est déclaré (temporairement ou définitivement) indisponible de sorte à ne plus être sélectionnable par un noeud E-CSCF pour ancrer la signalisation d'un appel d'urgence entrant.

Plus généralement, si plusieurs noeuds EATF sont associés à une priorité P1 dans la table TAB et ne répondent pas à la requête de transfert R émise par le noeud I-CSCF 3 à l'expiration de la période T, la mise à jour de la table TAB consiste à passer ces noeuds en priorité basse P2 tandis que les noeuds EATF initialement associés à une priorité basse P2 sont passés en priorité haute P1.

Par cette mise à jour de la table TAB on s'assure que le noeud EATF 6-5 prendra le relais du noeud EATF 6-4 défectueux pour les requêtes de transfert subséquentes. Le procédé de traitement selon l'invention s'achève suite à cette mise à jour (étape E110).

On peut par ailleurs imaginer que d'autres noeuds EATF sont associés au numéro de transfert E-STN-R2 avec une autre priorité P3 inférieure à P2. Les étapes E80 à E100 sont alors réitérées si besoin (en cas de non réponse d'un noeud EATF associé à la priorité P2) avec les noeuds associés à la priorité P3.

On peut également envisager qu'en cas de détection d'un état non opérationnel (et notamment d'inaccessibilité) d'un noeud de transfert auquel le noeud I-CSCF 3 a transmis la requête de transfert R, ce noeud soit associé lors de l'étape de mise à jour E100 de la table TAB à la priorité la plus basse considérée dans la table pour signaler au serveur I-CSCF 3 que ce noeud est hors service.

Si le noeud EATF 6-4 est au contraire dans un état opérationnel, comme ce noeud a ancré la signalisation de l'appel d'urgence lors de son établissement par le terminal 2, il répond positivement au serveur I-CSCF 3 (réponse oui à l'étape test E80) et le procédé de traitement selon l'invention s'achève (étape E110). Le noeud EATF 6-4 traite la requête de transfert reçue du serveur I-CSCF 3, et notamment fait suivre cette requête R vers le serveur E-CSCF 5-4, qui à son tour relaie cette requête vers le centre d'appel d'urgence PSAP comme mentionné précédemment.

Ainsi, une telle configuration de la table TAB avec des priorités différentes associées aux noeuds EATF a une application privilégiée mais non limitative dans des cas de réaménagements réseau (ex. augmentation capacitaire, mise en maintenance d'un noeud EATF, etc.).

## Revendications

1. Procédé de traitement, par un serveur d'entrée (3) d'un coeur de réseau IMS (1), de requêtes de transfert de sessions d'appel d'urgence, ledit procédé étant **caractérisé en ce qu'**il comprend :
- une étape préalable de configuration (E10) au niveau du serveur d'entrée, d'une table (TAB) associant à au moins un numéro de transfert de session d'appel d'urgence, une pluralité de noeuds (6-1,6-N) de transfert de session d'appel d'urgence, chaque noeud étant identifié dans ladite table par une adresse ;
- une étape de détermination (E30), déclenchée sur réception (E20) d'une requête de transfert d'une session d'appel d'urgence d'un premier réseau d'accès (NW1) vers un second réseau d'accès (NW2), ladite requête de transfert comprenant un numéro de transfert de session d'appel d'urgence, ladite étape comprenant la détermination à partir de la table configurée préalablement au niveau du serveur d'entrée, d'au moins une adresse d'un noeud de transfert associé au numéro de transfert compris dans la requête pour transférer cette requête ; et
- une étape d'envoi (E50) de la requête de transfert à destination de ladite au moins une adresse ainsi déterminée.

2. Procédé de traitement selon la revendication 1 dans lequel la table configurée au niveau du serveur d'entrée comprend, pour le numéro de transfert (E-STN-SR1) compris dans la requête reçue, une pluralité d'adresses de noeuds de transfert (6-1,6-2,6-3), et dans lequel, au cours de l'étape d'envoi, la requête de transfert est envoyée simultanément à destination de cette pluralité d'adresses.

3. Procédé de traitement selon la revendication 1 ou 2 dans lequel chaque noeud de transfert est associé à une priorité (P1,P2) dans la table configurée au niveau du serveur d'entrée, et dans lequel, au cours de l'étape d'envoi, la requête de transfert est envoyée simultanément à destination de la ou des adresses des noeuds (6-1,6-2,6-3;6-4) associés à la priorité la plus forte (P1) dans la table.

4. Procédé de traitement selon l'une quelconque des revendications 1 à 3 comprenant une étape de mise à jour de la table configurée préalablement au niveau du serveur d'entrée pour au moins un numéro de session de transfert d'urgence.

5. Procédé de traitement selon la revendication 3 comprenant, suite à la détection d'un état non opérationnel d'un noeud de transfert associé à la priorité la plus forte auquel le serveur d'entrée a envoyé la requête de transfert, une étape de mise à jour de ladite table au cours de laquelle ledit noeud de transfert est associé à une priorité (P2) inférieure à ladite priorité la plus forte.

6. Procédé de traitement selon la revendication 5 dans lequel ladite étape de mise à jour comprend en outre le changement de la priorité d'un noeud de transfert associé dans ladite table à une priorité inférieure (P2) à la priorité la plus forte, de sorte à lui associer ladite priorité la plus forte (P1).

7. Programme d'ordinateur comportant des instructions pour l'exécution des étapes du procédé de traitement selon l'une quelconque des revendications 1 à 6 lorsque ledit programme est exécuté par un ordinateur.

8. Support d'enregistrement lisible par un ordinateur sur lequel est enregistré un programme d'ordinateur comprenant des instructions pour l'exécution des étapes du procédé de traitement selon l'une quelconque des revendications 1 à 6.

9. Serveur d'entrée (3) d'un coeur de réseau IMS (1) comprenant :
- une table (TAB) configurée préalablement et localement au niveau du serveur d'entrée, ladite table associant à au moins un numéro de transfert de session d'appel d'urgence une pluralité de noeuds de transfert de session d'appel d'urgence, chaque noeud étant identifié dans ladite table par une adresse ;
- un module de réception (3A), apte à recevoir une requête de transfert d'une session d'appel d'urgence d'un premier réseau d'accès vers un second réseau d'accès, cette requête de transfert comprenant un numéro de transfert de session d'appel d'urgence ;
- un module de détermination (3B), activé par le module de réception sur réception de ladite requête de transfert, ledit module de détermination étant configuré pour déterminer à partir de la table configurée préalablement au niveau du serveur d'entrée, au moins une adresse d'un noeud de transfert associé au numéro de transfert compris dans la requête pour transférer cette requête ; et
- un module d'envoi (3C) de la requête de transfert à destination de ladite au moins une adresse déterminée par le module de détermination.

10. Serveur selon la revendication 9 dans lequel la table configurée au niveau du serveur d'entrée comprend, pour le numéro de transfert compris dans la requête reçue, une pluralité d'adresses de noeuds de transfert, et dans lequel le module d'envoi est configuré pour envoyer la requête de transfert simultanément à destination de ladite pluralité d'adresses.

11. Coeur de réseau IMS (1) comprenant une pluralité de noeuds (6-1...6-N) de transfert de session d'appel d'urgence associés à au moins un numéro de transfert d'appel d'urgence et un serveur d'entrée (3) dans le coeur de réseau IMS selon la revendication 9 ou 10.

## Patentansprüche

1. Verfahren zur Verarbeitung, durch einen Eingangsserver (3) eines IMS-Netzkerns (1), von Anfragen zur Übertragung von Notrufsitzungen, wobei das Verfahren **dadurch gekennzeichnet ist, dass** dieses umfasst:
- einen vorherigen Schritt (E10) des Auslegens, auf der Ebene des Eingangsservers, einer Tabelle (TAB), die mit mindestens einer Nummer zur Übertragung einer Notrufsitzung eine Vielzahl von Knoten (6-1, 6-N) zur Übertragung einer Notrufsitzung assoziiert, wobei jeder Knoten in der Tabelle durch eine Adresse identifiziert wird;
- einen Schritt (E30) des Bestimmens, der beim Empfangen (E20) einer Anfrage zur Übertragung einer Notrufsitzung von einem ersten Zugriffsnetz (NW1) zu einem zweiten Zugriffsnetz (NW2) ausgelöst wird, wobei die Anfrage zur Übertragung eine Nummer zur Übertragung der Notrufsitzung umfasst, wobei der Schritt das Bestimmen, aus der zuvor auf der Ebene des Eingangsservers ausgelegten Tabelle, mindestens einer Adresse eines Knotens zur Übertragung umfasst, der mit der Nummer zur Übertragung assoziiert ist, die in der Anforderung zur Übertragung dieser Anforderung enthalten ist; und
- einen Schritt (E50) des Sendens der Anforderung zur Übertragung an das Ziel der mindestens einen so bestimmten Adresse.

2. Verarbeitungsverfahren nach Anspruch 1,
wobei die auf der Ebene des Eingangsservers ausgelegte Tabelle, für die Nummer zur Übertragung (E-STN-SR1), die in der empfangenen Anfrage enthalten ist, eine Vielzahl von Adressen von Knoten (6-1, 6-2, 6-3) zur Übertragung umfasst, und wobei, während des Sendeschritts, die Anforderung zur Übertragung gleichzeitig an das Ziel dieser Vielzahl von Adressen gesendet wird.

3. Verarbeitungsverfahren nach Anspruch 1 oder 2,
wobei jeder Knoten zur Übertragung mit einer Priorität (P1, P2) in der auf der Ebene des Eingangsservers ausgelegten Tabelle assoziiert ist, und wobei, während des Sendeschritts, die Anforderung zur Übertragung gleichzeitig an das Ziel der Adresse oder der Adressen der Knoten (6-1, 6-2, 6-3; 6-4) gesendet wird, die mit der höchsten Priorität (P1) in der Tabelle assoziiert sind.

4. Verarbeitungsverfahren nach einem der Ansprüche 1 bis 3,
umfassend einen Schritt des Aktualisierens der zuvor auf der Ebene des Eingangsservers ausgelegten Tabelle für mindestens eine Nummer einer Notübertragungssitzung.

5. Verarbeitungsverfahren nach Anspruch 3,
umfassend, nach dem Detektieren eines nichtoperationalen Zustands eines Knotens zur Übertragung, der mit der höchsten Priorität assoziiert ist, an den der Eingangsserver die Anfrage zur Übertragung gesendet hat, einen Schritt des Aktualisierens der Tabelle, in dem der Knoten zur Übertragung mit einer niedrigeren Priorität (P2) als der höchsten Priorität assoziiert wird.

6. Verarbeitungsverfahren nach Anspruch 5,
wobei der Aktualisierungsschritt außerdem das Ändern der Priorität eines Knotens zur Übertragung, der in der Tabelle mit einer niedrigeren Priorität (P2) als der höchsten Priorität assoziiert ist, umfasst, um mit diesem die höchste Priorität (P1) zu assoziieren.

7. Computerprogramm, umfassend Instruktionen zur Ausführung der Schritte des Verarbeitungsverfahrens nach einem der Ansprüche 1 bis 6, wenn das Programm von einem Computer ausgeführt wird.

8. Computerlesbares Aufzeichnungsmedium, auf welchem ein Computerprogramm aufgezeichnet ist, das Instruktionen zur Ausführung der Schritte des Verarbeitungsverfahrens nach einem der Ansprüche 1 bis 6 umfasst.

9. Eingangsserver (3) eines IMS-Netzkerns (1), umfassend:
- eine Tabelle (TAB), die zuvor und lokal auf der Ebene des Eingangsservers ausgelegt wird, wobei die Tabelle mit mindestens einer Nummer zur Übertragung einer Notrufsitzung eine Vielzahl von Knoten zur Übertragung einer Notrufsitzung assoziiert, wobei jeder Knoten in der Tabelle durch eine Adresse identifiziert wird;
- ein Empfangsmodul (3A), das geeignet ist, eine Anfrage zur Übertragung einer Notrufsitzung von einem ersten Zugriffsnetz zu einem zweiten Zugriffsnetz zu empfangen, wobei diese Anfrage zur Übertragung eine Nummer zur Übertragung der Notrufsitzung umfasst;
- ein Bestimmungsmodul (3B), das von dem Empfangsmodul beim Empfangen der Anforderung zur Übertragung aktiviert wird, wobei das Bestimmungsmodul ausgelegt ist, aus der zuvor auf der Ebene des Eingangsservers ausgelegten Tabelle, mindestens eine Adresse eines Knotens zur Übertragung zu bestimmen, der mit der Nummer zur Übertragung assoziiert ist, die in der Anforderung zur Übertragung dieser Anforderung enthalten ist; und
- ein Sendemodul (3C) der Anforderung zur Übertragung an das Ziel der mindestens einen von dem Bestimmungsmodul bestimmten Adresse.

10. Server nach Anspruch 9,
wobei die auf der Ebene des Eingangsservers ausgelegte Tabelle, für die Nummer zur Übertragung, die in der empfangenen Anforderung enthalten ist, eine Vielzahl von Adressen von Knoten zur Übertragung umfasst, und wobei das Sendemodul ausgelegt ist, die Anforderung zur Übertragung gleichzeitig an das Ziel der Vielzahl von Adressen zu senden.

11. IMS-Netzkern (1), umfassend eine Vielzahl von Knoten (6-1...6-N) zur Übertragung einer Notrufsitzung, die mit mindestens einer Nummer zur Übertragung eines Notrufs assoziiert sind, und einen Eingangsserver (3) in dem IMS-Netzkern nach Anspruch 9 oder 10.

## Claims

1. Method for processing, by an input server (3) of an IMS core network (1), of emergency call session transfer requests, said method being **characterized in that** it comprises:
- a prior step of configuration (E10) at the level of the input server, of a table (TAB) associating with at least one emergency call session transfer number, a plurality of emergency call session transfer nodes (6-1,6-N), each node being identified in said table by an address;
- a step of determination (E30), triggered on reception (E20) of a request for transfer of an emergency call session from a first access network (NW1) to a second access network (NW2), said transfer request comprising an emergency call session transfer number, said step comprising the determination on the basis of the table configured previously at the level of the input server, of at least one address of a transfer node associated with the transfer number included in the request to transfer this request; and
- a step of sending (E50) the transfer request to said at least one address thus determined.

2. Method for processing according to Claim 1, in which the table configured at the level of the input server comprises, for the transfer number (E-STN-SR1) included in the request received, a plurality of addresses of transfer nodes (6-1,6-2,6-3), and in which, in the course of the sending step, the transfer request is sent simultaneously to this plurality of addresses.

3. Method for processing according to Claim 1 or 2, in which each transfer node is associated with a priority (P1,P2) in the table configured at the level of the input server, and in which, in the course of the sending step, the transfer request is sent simultaneously to the address or addresses of the nodes (6-1,6-2,6-3;6-4) associated with the highest priority (P1) in the table.

4. Method for processing according to any one of Claims 1 to 3, comprising a step of updating the table configured previously at the level of the input server for at least one emergency transfer session number.

5. Method for processing according to Claim 3 comprising, subsequent to the detection of a non-operational state of a transfer node associated with the highest priority to which the input server has sent the transfer request, a step of updating said table in the course of which said transfer node is associated with a priority (P2) lower than said highest priority.

6. Method for processing according to Claim 5, in which said updating step furthermore comprises the change of the priority of a transfer node associated in said table with a lower priority (P2) than the highest priority, so as to associate said highest priority (P1) therewith.

7. Computer program comprising instructions for the execution of the steps of the method for processing according to any one of Claims 1 to 6 when said program is executed by a computer.

8. Recording medium readable by a computer on which is recorded a computer program comprising instructions for the execution of the steps of the method for processing according to any one of Claims 1 to 6.

9. Input server (3) of an IMS core network (1) comprising:
- a table (TAB) configured previously and locally at the level of the input server, said table associating with at least one emergency call session transfer number a plurality of emergency call session transfer nodes, each node being identified in said table by an address;
- a reception module (3A), able to receive a request for transfer of an emergency call session from a first access network to a second access network, this transfer request comprising an emergency call session transfer number;
- a determination module (3B), activated by the reception module on receipt of said transfer request, said determination module being configured to determine on the basis of the table configured previously at the level of the input server, at least one address of a transfer node associated with the transfer number included in the request to transfer this request; and
- a sending module (3C) for sending the transfer request to said at least one address determined by the determination module.

10. Server according to Claim 9, in which the table configured at the level of the input server comprises, for the transfer number included in the request received, a plurality of addresses of transfer nodes, and in which the sending module is configured to send the transfer request simultaneously to said plurality of addresses.

11. IMS core network (1) comprising a plurality of emergency call session transfer nodes (6-1...6-N) associated with at least one emergency call transfer number and an input server (3) in the IMS core network according to Claim 9 or 10.
